# EUROPEAN PATENT APPLICATION

(11) **EP 4 831 097 A1**
(43) Date of publication of application: **28.10.2026**
(21) Application number: 26158108.6
(22) Date of filing: 12.02.2026
(51) Int. Cl.: B65G 47/90

(54) **GRIPPING DEVICE FOR MOVING PRODUCTS**

(30) Priority: 24.04.2025 IT 202500009207
(71) Applicant: G. Mondini SpA, 25033 Cologne (BS) (IT)
(72) Inventor: MONDINI, Paolo Carlo, 25033 Cologne BS (IT); TISI, Fulvio Fausto, 24055 Cologno al Serio BG (IT); CHIARI, Patrizio, 25033 Cologne BS (IT); GOZZINI, Luca, 25030 Castelcovati BS (IT)
(74) Representative: Ponchiroli, Simone

(57) **Abstract**

A gripping device for moving products comprising two spatulas (3), (4) and two auxiliary members (9), (10), which are specular, slidable and movable in a synchronised way. Two flexible belts (24), (28), fixed to the supporting structure (2), are wound around a spatula (3), (4) and an auxiliary member (9), (10). The spatulas (3), (4) move between home positions in which they are spaced apart from each other and operating positions in which they have respective front edges (6) adjacent. The flexible belts (24), (28), cover a supporting surface (5) of the spatula (3), (4) and are wound around a front edge (6) of the spatulas (3), (4) and a rear edge (12) of the auxiliary members (9), (10). The movement of the spatulas (3), (4) causes a relative sliding of the flexible belts (24), (28) and a change in their configuration without changes in their length.

## Description

This invention relates to a gripping device for moving products, in particular a gripping device of the type configured to pick up, in use, a product positioned on a supporting plane by inserting itself between the product and the supporting plane.

This invention was initially developed for products with limited intrinsic rigidity, such as slices of charcuterie, cheeses, etc., but may be used for moving any type of products.

At present, there are many prior art embodiments of gripping devices capable of inserting themselves under a product to be picked up.

In some prior art embodiments, such as those described in documents DE102009036117, JP2012250825 and EP2743041, one (which acts on only one side) or two rigid elements in the form of a spatula or plate (which act symmetrically on opposite sides of the product), are inserted under the product sliding on the supporting plane on which the product is located.

The disadvantage of these embodiments is linked to the fact that the spatula-shaped rigid element, when pushed between the supporting plane and the product, risks deforming the product relative to the shape it is intended to have once packaged. Therefore, they are not suitable for gripping relatively delicate products such as cold cuts.

In an attempt to overcome that disadvantage, in other prior art embodiments, each spatula- or plate-shaped rigid element was covered with a flexible belt which, during insertion under the product, slides relative to the rigid element and should remain substantially stationary relative to the product to be moved. Examples of this type are described for example in documents US20130033049 (in which the belt is of the endless type), JP08133463, WO200793774 and GB2435252 (in which one side of the belt is fixed to the structure of the device, whilst the other is connected to the structure by means of a spring whose function is to maintain tension in the belt during use).

A further variant is described in WO2023162292 in which both edges of the belt are wound on rollers; the belt is wound up on one of the rollers and unwound from the other roller to follow the shifting of the rigid element.

However, even all of these prior art embodiments, which use a belt wound on the rigid element, have some disadvantages, mainly linked to the difficulty maintaining enough tension in the belt both during normal use, and as time passes.

On one hand, the pull back force applied by the elastic means on the belt during unloading of the material is not constant; on the other hand, in order to succeed in pulling back the belt in the appropriate way in any circumstance it is necessary to oversize the pull applied by the elastic means (which must be preloaded). Moreover, if motor-driven rollers are used, further problems are linked to the fact that, almost at any moment, the tangential speed of the belt being unwound is different from that of the belt being wound up. Furthermore, as time passes, the elastic characteristics of the elastic means may deteriorate and therefore it is necessary to regularly recalibrate them.

In this context the technical purpose which forms the basis of this invention is to provide a gripping device for moving products, of the type described above, which overcomes the above-mentioned disadvantages.

In particular, the technical purpose of this invention is to provide a gripping device for moving products which is an alternative to the prior art ones, which guarantees extremely precise gripping and releasing actions and a lasting high level of reliability.

The technical purpose specified and the aims indicated are substantially achieved by a gripping device for moving products, as described in independent claim 1. Particular embodiments of this invention are defined in the corresponding dependent claims.

Further features and the advantages of this invention will be more apparent in the detailed description of several preferred, non-limiting embodiments of a gripping device for moving products, illustrated in the accompanying drawings, in which:
- Figure 1 shows, in a three-quarter schematic axonometric view, a gripping device for moving products in accordance with a first embodiment of this invention, in a home configuration;
- Figure 2 shows the device of Figure 1, in a front axonometric view;
- Figure 3 shows the device of Figure 1, in a front view;
- Figure 4 is an enlarged view of the detail IV of Figure 1;
- Figure 5 is an enlarged view of the detail V of Figure 1;
- Figure 6 is an enlarged view of the detail VI of Figure 1;
- Figure 7 is an enlarged view of the detail VII of Figure 3;
- Figure 8 shows the device of Figure 1 in an operating configuration; in this figure two flexible belts of the device have been removed to better illustrate other elements;
- Figure 9 is an enlarged view of the detail IX of Figure 8;
- Figure 10 is an enlarged view of the detail X of Figure 8;
- Figure 11 is an enlarged view of only the lower part of the device of Figure 1 which is in the home configuration;
- Figure 12 shows the lower part visible in Figure 11, in the operating configuration;
- Figure 13 shows, in a front view, a gripping device for moving products in accordance with a second embodiment of this invention, in the operating configuration;
- Figure 14 shows several details of the device of Figure 13, in an axonometric top view and from the front from an inclined viewpoint which substantially corresponds to the arrow XIV of Figure 13; e
- Figures 15 to 18 are enlarged views, respectively, of details XV, XVI, XVII and XVIII of Figure 14.

With reference to the above-mentioned figures the reference number 1 denotes in its entirety a gripping device for moving products according to this invention.

Similarly to prior art gripping devices of the same type, the gripping device 1 according to this invention is configured to pick up, in use, a product positioned on a supporting plane by inserting itself between the product and the supporting plane substantially without creating sliding between the product and the gripping device 1.

Similarly to other prior art devices, the gripping device 1 comprises a supporting structure 2.

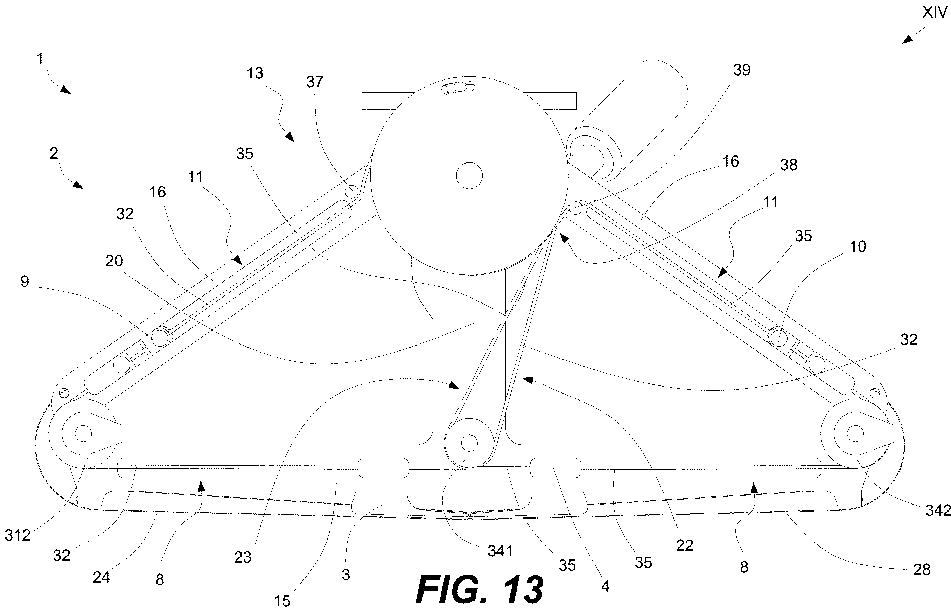

Specularly mounted on the supporting structure 2 there is a first spatula 3 and a second spatula 4 (both spatulas being mechanically rigid elements). In the context of this description, we only distinguish between the first spatula 3 and second spatula 4 to make some explanations clearer (in particular with reference to the embodiment of Figures 13 to 18); in fact, the two spatulas 3, 4 may be identical to each other.

The first spatula 3 is slidable relative to the supporting structure 2 to open and close the gripping device 1 together with the second spatula 4 and to cause, in use, the pick-up or release of a product.

Similarly, the second spatula 4 is slidable relative to the supporting structure 2 to open and close the gripping device 1 together with the first spatula 3 and to cause, in use, the pick-up or release of a product.

The first spatula 3 has a substantially flat supporting surface 5 delimited by a front edge 6 which is configured to be inserted, in use, under the product to be picked up.

Similarly, the second spatula 4 also has a substantially flat supporting surface 5 delimited by a respective front edge 6 which is configured to be inserted, in use, under the product to be picked up, acting from the opposite side relative to the front edge 6 of the first spatula 3.

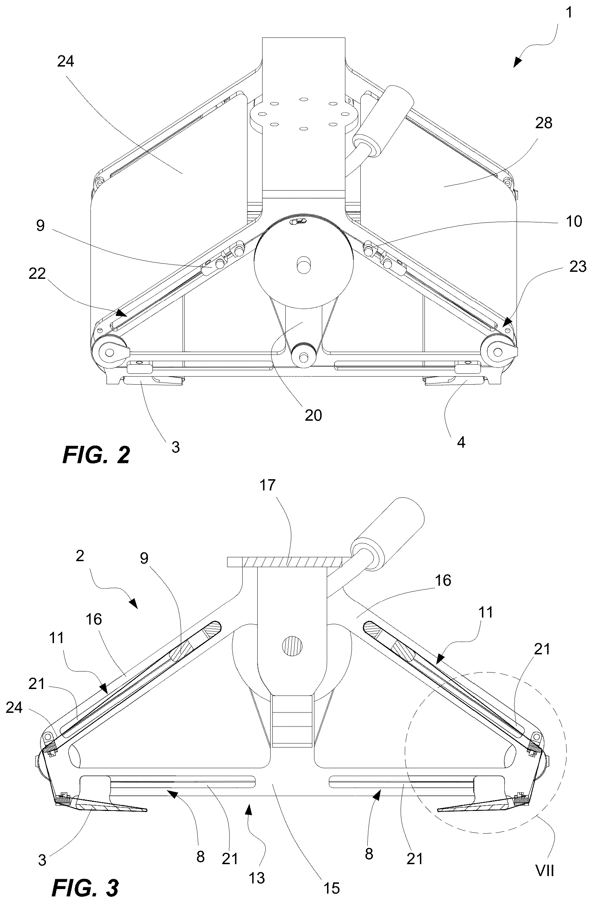

Both the first spatula 3, and the second spatula 4 extend mainly parallel to a first main line of extension (perpendicular to the sheet in Figure 3 and to which the supporting surfaces 5 are parallel).

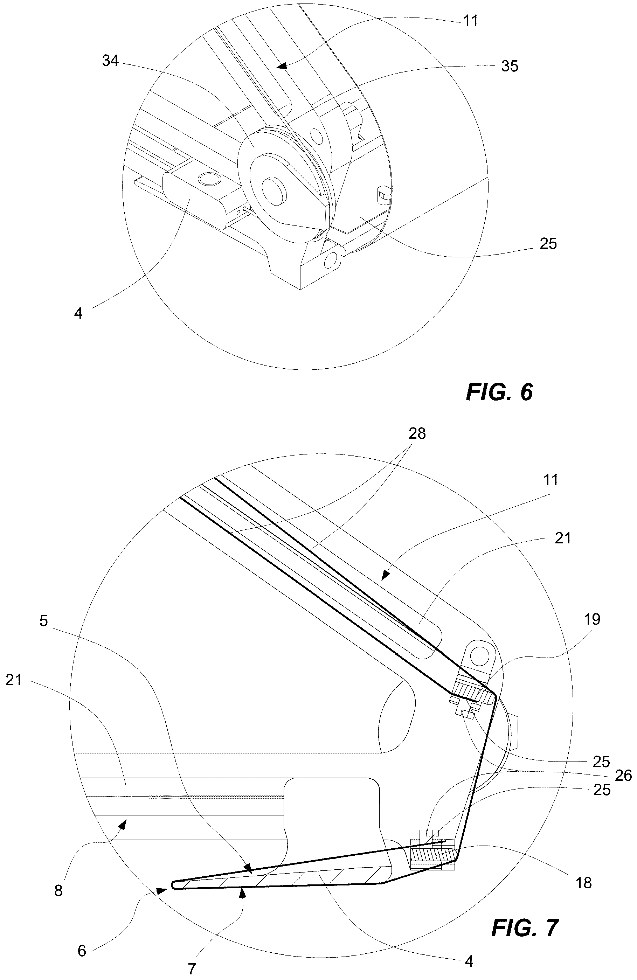

Advantageously, the supporting surface 5 of each of the first spatula 3 and the second spatula 4 slopes upwards, starting from the respective front edge 6, by an angle of less than 10°. Advantageously, the lower surface 7 of each of the first spatula 3 and the second spatula 4, facing the opposite way to the supporting surface 5, also slopes upwards starting from the front edge 6 by an angle of less than 10°. Preferably, for each of the first spatula 3 and the second spatula 4, the supporting surface 5 slopes upwards more than the lower surface 7 and the thickness of the spatula 3, 4 increases moving away from the lower edge (Figure 7).

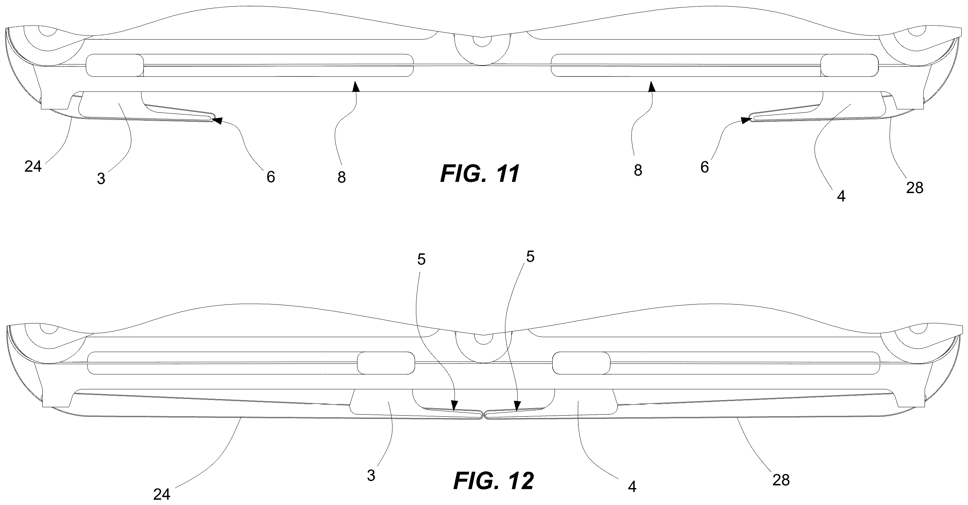

Moreover, advantageously, in use, the front edges 6 of the first spatula 3 and of the second spatula 4 are positioned lower than the supporting structure 2. The first spatula 3 is slidably mounted in a respective first guide 8 associated with the supporting structure 2, which defines, for the first spatula 3, a first movement path along a respective first trajectory which extends between a respective home position (Figure 11) and a respective operating position (Figure 12).

The second spatula 4 is slidably mounted in a respective first guide 8 associated with the supporting structure 2, which defines, for the second spatula 4, a respective first movement path along a respective first trajectory which extends between a respective home position (Figure 11) and a respective operating position (Figure 12). Each first trajectory lies in a sliding plane perpendicular to the supporting surfaces 5 of the first spatula 3 and of the second spatula 4. In the accompanying figures the sliding plane is also perpendicular to the spacing line.

As can be seen in the accompanying figures, in some preferred embodiments the two spatulas 3, 4 and the respective first guides 8 are specularly identical to each other.

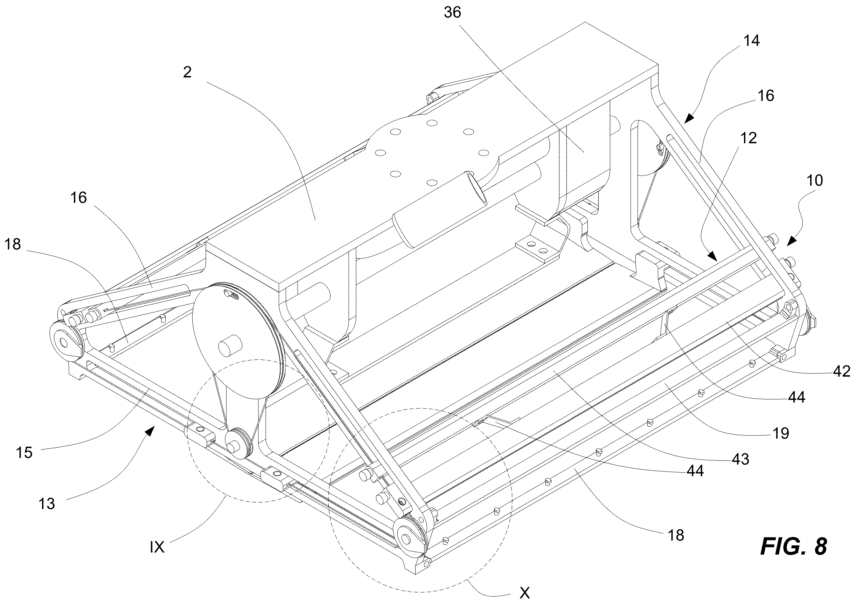

When they are in the respective home positions, the first spatula 3 and the second spatula 4 are spaced apart from each other and allow the positioning of a product to be picked up between their front edges 6 (Figure 11) whilst, when they are in the respective operating positions, they are positioned with the respective front edges 6 adjacent and the respective supporting surfaces 5 positioned side by side and directed upwards for, in use, together supporting the product from below (Figures 8 and 12).

In some embodiments, during the movement of the first spatula 3 and of the second spatula 4 along the respective first trajectory, the respective front edges 6 move in a single translating plane which in use is horizontal. According to one of the innovative aspects of this invention, the device also comprises a first auxiliary member 9 and a second auxiliary member 10 (both mechanically rigid elements) which are specularly mounted on the supporting structure 2, on the same side, respectively, as the first spatula 3 and as the second spatula 4, and which are also slidable relative to the supporting structure 2. In the context of this description, we only distinguish between the first auxiliary member 9 and second auxiliary member 10 to make some explanations clearer (in particular with reference to the embodiment of Figures 13 to 18); in fact, the two auxiliary members 9, 10 may be identical to each other.

As is explained in more detail below, the first auxiliary member 9 is operatively associated with the first spatula 3, whilst the second auxiliary member 10 is operatively associated with the second spatula 4.

The first auxiliary member 9 is slidably mounted in a respective second guide 11 associated with the supporting structure 2, and mainly extends parallel to a second main line of extension parallel to the first main line of extension. The first auxiliary member 9 also has a rear edge 12 parallel to the front edges 6. Similarly, the second auxiliary member 10 is slidably mounted in a respective second guide 11 associated with the supporting structure 2, and mainly extends parallel to the second main line of extension. The second auxiliary member 10 also has the rear edge 12 parallel to the front edges 6.

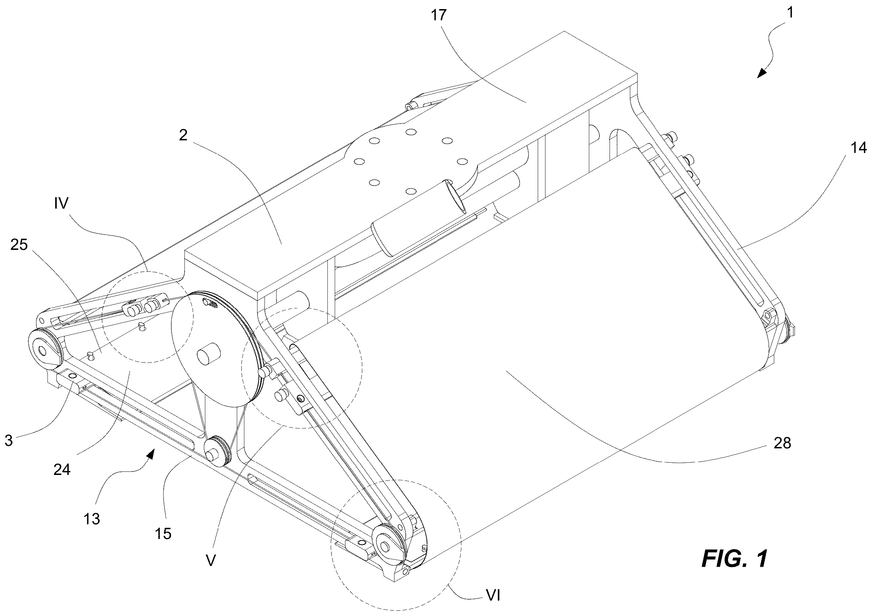

Each second guide 11 defines a second movement path for, respectively, the first auxiliary member 9 or the second auxiliary member 10. Each movement path extends along a second trajectory which extends between a first position (Figure 1) and a second position (Figure 8) and lies in the sliding plane.

In accordance with a second innovative aspect of this invention, the first trajectory and the second trajectory have the same length.

As can be seen in the accompanying figures, in some preferred embodiments the two auxiliary members 9, 10 and the respective second guides 11 are specularly identical to each other.

In some embodiments, such as that illustrated in the accompanying figures (see in particular Figure 8), each of the two auxiliary members 9, 10 comprises a supporting member 42, a guiding member 43 which defines the rear edge 12 and one or more elastic elements interposed between the supporting member 42 and the guiding member 43. In the embodiment illustrated, the elastic elements are constituted of two leaf springs 44 fixed to the guiding member 43 and resting against the supporting member 42. Thanks to the presence of the one or more elastic elements, a thrust applied on the guiding member 43 towards the supporting member 42 causes a deformation of the elastic elements and causes the guiding member 43 to move towards the supporting member 42; however, in the absence of forces which push the guiding member 43 towards the supporting member 42, the two may remain at the predetermined distance. The effect and reason for that design choice are examined in more detail below.

In some embodiments, the supporting structure 2 comprises a first shoulder 13 and a second shoulder 14 facing each other and spaced apart from each other along a spacing line perpendicular to the sliding plane. The two shoulders 13, 14 are advantageously connected by one or more crosspieces which extend along the spacing line. The two shoulders 13, 14 are also advantageously specular.

The first spatula 3, the second spatula 4, the first auxiliary member 9 and the second auxiliary member 10 each have two opposite ends slidably associated one with the first shoulder 13 and one with the second shoulder 14.

In some embodiments, such as those illustrated in the accompanying figures, the first shoulder 13 and the second shoulder 14 each comprise a base portion 15 and two lateral portions 16 which extend upwards from the base portion 15. Each first guide 8 is defined by the base portion 15 of the first shoulder 13 and by the base portion 15 of the second shoulder 14, whilst each second guide 11 is defined by a lateral portion 16 of the first shoulder 13 and by a lateral portion 16 of the second shoulder 14 which are facing each other. Advantageously, the lateral portions 16 and the base portion 15 of each of the first shoulder 13 and the second shoulder 14, extend, respectively, along two sloping sides and along a base of an isosceles triangle; moreover, the crosspieces connect the first shoulder 13 and the second shoulder 14 to each other near the vertices of the triangle. In the embodiment illustrated, a main crosspiece 17 connects the first shoulder 13 and the second shoulder 14 to each other at the joining zone between the lateral portions 16, whilst two pairs of secondary crosspieces 18, 19 connect the first shoulder and the second shoulder 13, 14 to each other near the joining zone between the base portion 15 and each lateral portion 16. In each pair, a first secondary crosspiece 18 connects the two base portions 15, whilst a second secondary crosspiece 19 connects the lateral portions 16 (Figures 7 and 8). Finally, in the accompanying figures, each shoulder 13, 14 comprises a central portion 20 which connects the joining zone between the lateral portions 16 with the centre of the base portion 15 (therefore it extends along a height of the isosceles triangle).

In some embodiments, each first guide 8 and each second guide 11 comprises two sliding slots 21 which are straight, opposite each other and made, respectively, one in the first shoulder 13 and one in the second shoulder 14. The ends of the first spatula 3, of the second spatula 4, of the first auxiliary member 9 and of the second auxiliary member 10 are slidably coupled to the respective sliding slots 21, as illustrated in the accompanying figures. Moreover, advantageously, the sliding slots 21 of each first guide 8 extend parallel to the base of the isosceles triangle, whilst the sliding slots 21 of each second guide 11 extend parallel to a respective side of the isosceles triangle. In some embodiments, the first shoulder 13 and the second shoulder 14 have a structure symmetrical relative to a central plane of symmetry parallel to the spacing line (which in use is positioned vertically); moreover, with reference to the same plane of symmetry, the first shoulder 13 and the first auxiliary member 9 are positioned symmetrically relative to the second shoulder 14 and to the second auxiliary member 10.

The gripping device 1 comprises first movement means 22 for simultaneously moving the first spatula 3 and the first auxiliary member 9, and second movement means 23 for simultaneously moving the second spatula 4 and the second auxiliary member 10, both mounted on the supporting structure 2. The first movement means 22 simultaneously move the first spatula 3 along the respective first trajectory and the first auxiliary member 9 along the respective second trajectory, in such a way that, when the first spatula 3 is in the operating position, the first auxiliary member 9 is in the second position and, when the first spatula 3 is in the home position, the first auxiliary member 9 is in the first position. Moreover, the first movement means 22 move the first spatula 3 along the respective first trajectory and the first auxiliary member 9 along the respective second trajectory with speed and acceleration which at all times have substantially the same absolute value. The sliding line is determined by the first guides 8 and by the second guides 11, whilst the direction of movement is such that, when the first spatula 3 moves towards the operating position, the first auxiliary member 9 moves towards the second position, whilst when the first spatula 3 moves towards the home position, the first auxiliary member 9 moves towards the first position.

The front edge 6 of the first spatula 3 and the rear edge 12 of the first elongate member are considered respectively front and rear with reference to the shifting of the first spatula 3 towards the operating position and of the first elongate member towards the second position.

The second movement means 23 simultaneously move the second spatula 4 along the respective first trajectory and the second auxiliary member 10 along the respective second trajectory, in such a way that, when the second spatula 4 is in the operating position, the second auxiliary member 10 is in the second position and, when the second spatula 4 is in the home position, the second auxiliary member 10 is in the first position. Regarding speed, acceleration, line and direction of movement, what was described for the first movement means 22 applies (with appropriate adjustments). The same is true for identification of the front edge 6 of the second spatula 4 and of the rear edge 12 of the second auxiliary member 10.

The gripping device 1 also comprises a first flexible belt 24 which has two end edges 25 fixed to the supporting structure 2, and which is associated with the first spatula 3 and with the first auxiliary member 9.

The first flexible belt 24 is configured in such a way as to change its configuration as a result of a movement of the first spatula 3 and of the first auxiliary member 9.

Moreover, the first flexible belt 24 is positioned in such away that, for any position adopted by the first spatula 3 along the respective first trajectory, the first flexible belt 24 covers the supporting surface 5 of the first spatula 3, and is wound around the front edge 6 of the first spatula 3 and around the rear edge 12 of the first auxiliary member 9. Furthermore, the movement of the first spatula 3 along the first trajectory causes a relative sliding of the first flexible belt 24 on the supporting surface 5 and around the front edge 6 of the first spatula 3, as well as around the rear edge 12 of the first auxiliary member 9 (and on at least one face of the auxiliary member adjacent to the rear edge 12) and a consequent change in the configuration of the first flexible belt 24. Advantageously, in some embodiments, the first flexible belt 24 extends along an articulated path. Starting from an end edge 25 fixed to the first secondary crosspiece 18, the first flexible belt 24 initially extends towards the first spatula 3, covers the supporting surface 5, is wound around the front edge 6 substantially inverting its line of extension (the true angle is usually between 165° and 180°) and then extends towards the first secondary crosspiece 18 which acts as a return element for guiding it towards the second secondary crosspiece 19. The latter also acts as a return element and guides the extension of the first flexible belt 24 towards the first auxiliary member 9. The belt is then wound around the rear edge 12 (with an angle usually of between 170° and 180°) and returns towards the second secondary crosspiece 19 to which the other end edge 25 is fixed.

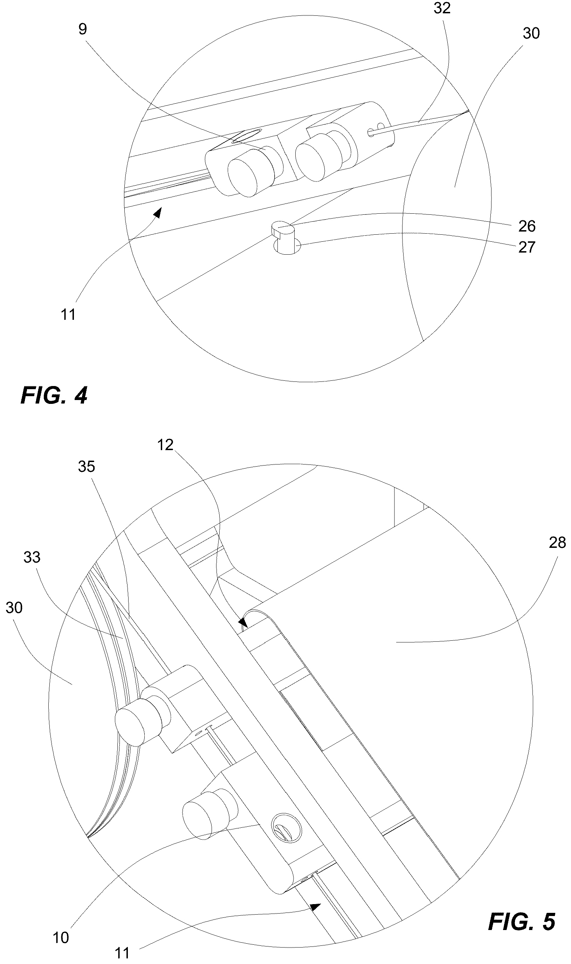

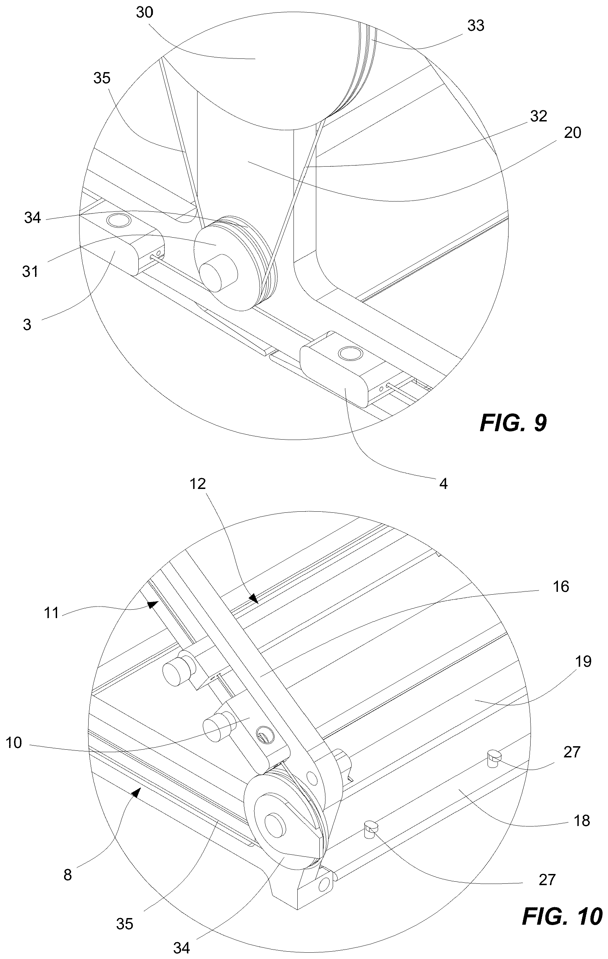

Advantageously, the fixing of each end edge 25 is achieved thanks to a plurality of retaining teeth 26 which define an undercut and are coupled to as many through holes 27 made in the belt (Figures 4, 7 and 10).

The gripping device 1 also comprises a second flexible belt 28 which has two end edges 25 fixed to the supporting structure 2, and which is associated with the second spatula 4 and with the second auxiliary member 10 for changing its configuration as a result of the movement of the second spatula 4 and of the second auxiliary member 10 in ways very similar to those described for the first flexible belt 24. Even the fixing, the extension and the movement of the second flexible belt 28 are similar to those of the first flexible belt 24; in some embodiments, the first flexible belt 24 and the second flexible belt 28 are symmetrical relative to the above-mentioned plane of symmetry. Advantageously, in any position adopted by the first spatula 3 and by the first auxiliary member 9, a main stretch of the first flexible belt 24, which extends from the front edge 6 of the first spatula 3 to the rear edge 12 of the first auxiliary member 9, substantially always has a same length, just as a main stretch of the second flexible belt 28, which extends from the front edge 6 of the second spatula 4 to the rear edge 12 of the second auxiliary member 10, substantially always has a same length.

The technical solution in which each of the two auxiliary members 9, 10 comprises a supporting member 42, a guiding member 43 and one or more elastic elements interposed between the supporting member 42 and the guiding member 43, serves to allow the length of the main stretch 29 of each of the flexible belts 24, 28 to be kept substantially constant with changes in the position adopted by each spatula 3, 4 and by each auxiliary member 9, 10. With reference for example to the embodiment illustrated in the accompanying figures, if the auxiliary members 9, 10 were rigid the length of the main stretch 29 would in contrast undergo a change in length less than the change in position of the main stretch 29 during the movement of each spatula 3, 4 and of each auxiliary member 9, 10; looking for example at Figure 7, and considering how the second spatula 4 moves, it is easy to infer how the length would change. The stretches of each flexible belt 24, 28 between the main stretch 29 and one of the end edges 25 would also undergo similar changes in length.

In accordance with this invention, each flexible belt 24, 28 is mounted on the respective spatula 3, 4 and the respective auxiliary member 9, 10, when they are positioned in the position which, in the absence of the elastic elements, would correspond to the minimum length of the main stretch 29 (mounting is carried out by keeping the elastic elements not compressed, or slightly compressed if wanting to preload them in order to cause a predetermined tensioning of the belt). In fact, by doing that, any subsequent movement which tends to cause a lengthening of the main stretch 29 (as well as of the rest of the flexible belt 24, 28) tends to increase the tension of the flexible belt 24, 28 and therefore to generate a force on the rear edge 12, which pushes the guiding member 43 towards the supporting member 42. The elastic elements are advantageously sized in such a way that the force generated in this way is sufficient to deform them enough to keep the length of the main stretch 29 substantially unchanged. Then, when that force is no longer present, the elastic elements return towards their undeformed condition moving the guiding member 43 away from the supporting member 42.

Advantageously, the gripping device 1 is configured in such a way that the change in length to be compensated for is less than 3%, preferably less than 2% and even more preferably less than 1.5% (percentage value refers to the length of the main stretch 29). The deformation travel of the one or more elastic elements is therefore such that it entirely compensates for that potential change.

In some embodiments, the first movement means 22 comprise at least a first motor, a first driving pulley 30 driven by the first motor, a plurality of first return pulleys 31, and one or more first flexible tension wires 32 wound around the first driving pulley 30 and around the first return pulleys 31 and fixed to the first spatula 3 and to the first auxiliary member 9. At least one of the first flexible tension wires 32 is also associated with the respective first driving pulley 30, in such a way as to avoid sliding during the rotations of the first driving pulley 30. Advantageously, the first movement means 22 comprise a first driving pulley 30, a plurality of first return pulleys 31, and one or more first flexible tension wires 32 at each shoulder 13, 14, in such a way as to act simultaneously on both ends of the first spatula 3 and of the first auxiliary member 9.

Similarly, the second movement means 23 comprise at least a second motor, a second driving pulley 33 driven by the second motor, a plurality of second return pulleys 34, and one or more second flexible tension wires 35 wound around the second driving pulley 33 and around the second return pulleys 34 and fixed to the second spatula 4 and to the second auxiliary member 10. At least one of the second flexible tension wires 35 is also associated with the second driving pulley 33 in such a way as to avoid sliding relative to each other during the rotations of the second driving pulley 33. Advantageously, the second movement means 23 also comprise a second driving pulley 33, a plurality of second return pulleys 34, and one or more second flexible tension wires 35 at each shoulder 13, 14, in such a way as to act simultaneously on both ends of the second spatula 4 and of the second auxiliary member 10.

In the embodiments in which the auxiliary members 9, 10 comprise the supporting member 42 and the guiding member 43, the first flexible tension wires 32 and the second flexible tension wires 35 are only fixed to the supporting member 42, and do not interact with the guiding member 43 (in the embodiment illustrated they simply slide across it).

Regarding the movement of the first driving pulley 30 and of the second driving pulley 33, there are different possible embodiments.

In some embodiments, the first motor and the second motor are constituted of a single motor 36.

Moreover, in some of these embodiments, the first driving pulley 30 and the second driving pulley 33 are coaxial and rotate with a same direction of rotation. In contrast, in others of these embodiments, the first driving pulley 30 and the second driving pulley 33 are coaxial and rotate with opposite directions of rotation.

This latter case includes the embodiment of Figures 1 to 12, wherein the single motor 36 is connected to the first driving pulley 30 and to the second driving pulley 33 by means of two internal transmissions (not visible in the figures) which are synchronised to drive the rotation of the two pulleys with the same angular velocity but opposite direction.

The former case includes, for example, in contrast, the embodiment of Figures 13 to 18, wherein a first flexible tension wire 32 is partly wound around the first driving pulley 30 with a direction of winding opposite to that with which a second flexible tension wire 35 is partly wound around the second driving pulley 33.

As shown in Figure 13, whilst the first flexible tension wires 32 (those associated with the first shoulder 13 in Figure 13) as a whole are positioned along a looped path defined by the first driving pulley 30 positioned at the centre of the first shoulder 13, by a first inner return pulley 311 positioned at the centre of the base portion 15, by a first outer return pulley 312 positioned at the connecting zone between the base portion 15 and the lateral portion 16 and by a first guiding roller 37 placed near the first driving pulley 30.

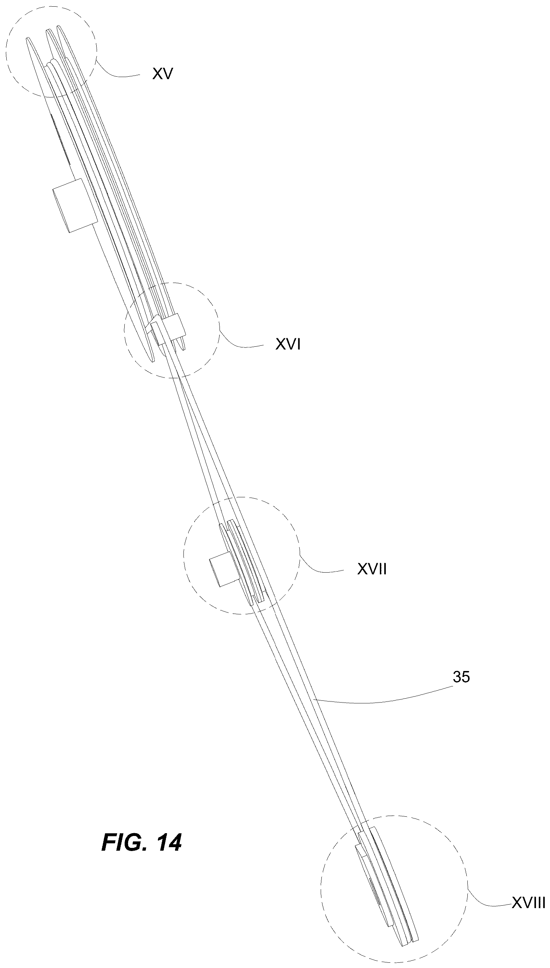

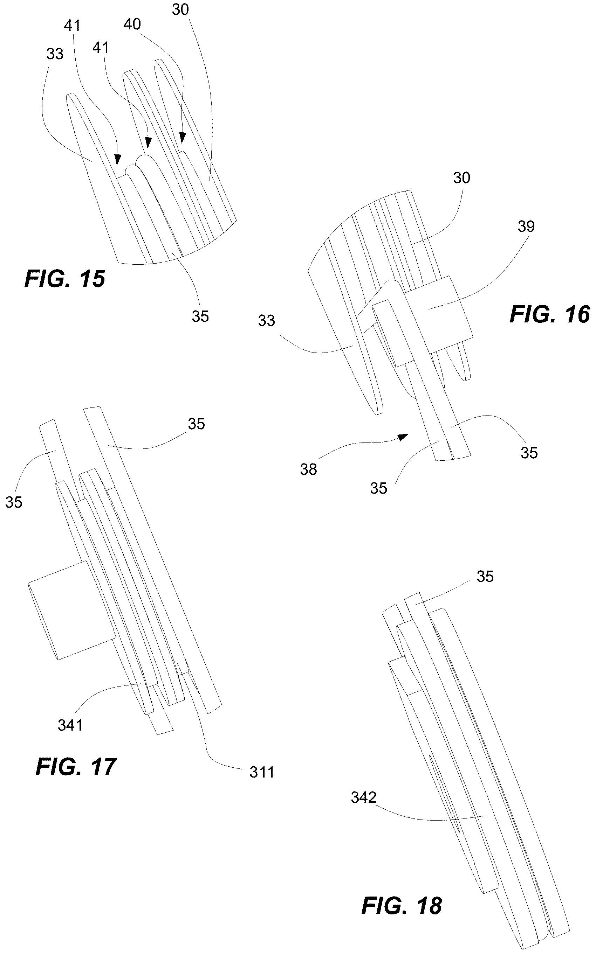

In a different way, in Figure 13 the second flexible tension wires 35 are as a whole positioned to form a double loop, with the second flexible tension wire 35 wound around the second driving pulley 33 which has two stretches which slide overlapping (without contact) at an overlapping zone 38 (Figure 16); the first loop (open) extends from the overlapping zone 38 (on the right-hand side in Figure 13) and is defined by a second inner return pulley 341 (coaxial with the first inner return pulley 311), by a second outer return pulley 342 (symmetrical relative to the first outer return pulley 312) and by a second guiding roller 39 (on which the second flexible tension wire 35 is guided in the opposite way relative to the first flexible tension wire 32 on the first guiding roller 37). The second loop (open) extends from the overlapping zone 38 (on the left-hand side in Figure 13) and is defined by the second driving pulley 33. To allow the overlapping zone 38 of the second flexible tension wire 35 to be present, unlike the first driving pulley 30 which defines a single circumferential groove 40 (Figure 15), the second driving pulley 33 defines two grooves 41 side by side which extend for most of its circumferential extent (Figures 15 and 16); on the opposite side relative to the viewpoint of Figure 14, the two grooves 41 are in communication with each other (part not illustrated in the figures) in such a way that the second flexible tension wire 35 which is located in the lying plane of one of the two grooves 41 can pass into the lying plane of the other groove 41 (Figure 16 - notice that Figures 14 to 18 show the second movement means 22 together with the first driving pulley 30 and with the first inner return pulley 311 but not the first flexible tension wires 32).

Advantageously, that result is possible thanks to the fact that the circumferential extent of the two grooves 41, where they are separate, is greater than the length of the first and of the second trajectory; in fact, in this way, by appropriately angularly positioning the second driving pulley 33 during installation, it is possible to ensure that the second flexible tension wire 35 enters and exits the second driving pulley 33 always and only at a zone where the grooves 41 are separate.

Operation of the gripping device 1 according to this invention is similar to that of the prior art devices of the same type.

With the first spatula 3 and the second spatula 4 positioned in the home positions (Figure 11), the gripping device 1 is positioned above the product to be picked up with the front edges 6 resting or almost resting on the supporting plane and placed on the two sides of the product. At that point, the first spatula 3 and the first auxiliary member 9 on one side, and the second spatula 4 and the second auxiliary member 10 on the other side, are moved along the respective trajectories, moving the front edges 6 first towards the product to be picked up and, then, under it until the operating positions of the spatulas 3, 4 are reached. Simultaneously, the first flexible belt 24 and the second flexible belt 28 gradually change their configuration by sliding on the supporting surfaces 5 but being inserted under the product substantially without sliding relative to it.

In contrast, releasing of the product is carried out by performing the opposite movement.

This invention brings important advantages.

Thanks to this invention a gripping device for moving products was defined which, thanks to the synchronised movement of the spatulas and of the auxiliary members, guarantees extremely precise gripping and releasing actions and a lasting high level of reliability.

Finally, it should be noticed that this invention is relatively easy to produce and that even the cost linked to implementing the invention is not very high.

The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. A gripping device for moving products, configured to pick up, in use, a product positioned on a supporting plane by inserting itself between the product and the supporting plane, the gripping device (1) comprising:
a supporting structure (2);
a first spatula (3) and a second spatula (4) which are specularly mounted on the supporting structure (2) and which are slidable relative to the supporting structure (2);
a first auxiliary member (9) and a second auxiliary member (10) which are specularly mounted on the supporting structure (2), on the same side, respectively, as the first spatula (3) and as the second spatula (4), and which are slidable relative to the supporting structure (2);
first movement means (22) for simultaneously moving the first spatula (3) and the first auxiliary member (9);
second movement means (23) for simultaneously moving the second spatula (4) and the second auxiliary member (10);
a first flexible belt (24) which has two end edges (25) fixed to the supporting structure (2), and which is associated with the first spatula (3) and with the first auxiliary member (9) for changing its configuration as a result of the movement of the first spatula (3) and of the first auxiliary member (9); and
a second flexible belt (28) which has two end edges (25) fixed to the supporting structure (2), and which is associated with the second spatula (4) and with the second auxiliary member (10) for changing its configuration as a result of the movement of the second spatula (4) and of the second auxiliary member (10); wherein, moreover:
each of the first spatula (3) and the second spatula (4) is slidably mounted in a respective first guide (8) associated with the supporting structure (2), and has a substantially flat supporting surface (5) delimited by a front edge (6) which is configured to be inserted, in use, under the product to be picked up;
each of the first guides (8) defines a first movement path for, respectively, the first spatula (3) and the second spatula (4), along a first trajectory which extends between a home position and an operating position and which lies in a sliding plane perpendicular to the supporting surface (5), respectively, of the first spatula (3) and of the second spatula (4);
the first spatula (3) and the second spatula (4), when they are in the respective home positions, are spaced apart from each other and allow the positioning of a product to be picked up between their front edges (6) and, when they are in the respective operating positions, are positioned with the respective front edges (6) adjacent and the respective supporting surfaces (5) positioned side by side and directed upwards for, in use, together supporting the product from below;
each of the first auxiliary member (9) and the second auxiliary member (10) is slidably mounted in a respective second guide (11) associated with the supporting structure (2);
each of the first auxiliary member (9) and the second auxiliary member (10) has a second main line of extension parallel to a first main line of extension, respectively, of the first spatula (3) and of the second spatula (4) and a rear edge (12) parallel to the front edge (6);
each of the second guides (11) defines a second movement path for, respectively, the first auxiliary member (9) and the second auxiliary member (10), which extends along a second trajectory which extends between a first position and a second position and which lies in said sliding plane;
the first trajectory and the second trajectory have the same length;
the first movement means (22) simultaneously move the first spatula (3) along the respective first trajectory and the first auxiliary member (9) along the respective second trajectory, in such a way that, when the first spatula (3) is in the operating position, the first auxiliary member (9) is in the second position and, when the first spatula (3) is in the home position, the first auxiliary member (9) is in the first position;
the second movement means (23) simultaneously move the second spatula (4) along the respective first trajectory and the second auxiliary member (10) along the respective second trajectory, in such a way that, when the second spatula (4) is in the operating position, the second auxiliary member (10) is in the second position and, when the second spatula (4) is in the home position, the second auxiliary member (10) is in the first position;
the first flexible belt (24), in any position adopted by the first spatula (3) along the respective first trajectory, covers the supporting surface (5) of the first spatula (3), and is wound around the front edge (6) of the first spatula (3) and around the rear edge (12) of the first auxiliary member (9);
a movement of the first spatula (3) along the first trajectory causes a relative sliding of the first flexible belt (24) on the supporting surface (5) and around the front edge (6) of the first spatula (3) and a change in the configuration of the first flexible belt (24);
the second flexible belt (28), in any position adopted by the second spatula (4) along the respective first trajectory, covers the supporting surface (5) of the second spatula (4), and is wound around the front edge (6) of the second spatula (4) and around the rear edge (12) of the second auxiliary member (10); and
a movement of the second spatula (4) along the second trajectory causes a relative sliding of the second flexible belt (28) on the supporting surface (5) and around the front edge (6) of the second spatula (4) and a change in the configuration of the second flexible belt (28) around the front edge (6) and around the rear edge (12).

2. The gripping device according to claim 1, wherein the first movement means (22) comprise a first motor, a first driving pulley (30) driven by the first motor, a plurality of first return pulleys (31), and one or more first flexible tension wires (32) wound around the first driving pulley (30) and around the first return pulleys (31) and fixed to the first spatula (3) and to the first auxiliary member (9).

3. The gripping device according to claim 1 or 2, wherein the second movement means (23) comprise a second motor, a second driving pulley (33) driven by the second motor, a plurality of second return pulleys (34), and one or more second flexible tension wires (35) wound around the second driving pulley (33) and around the second return pulleys (34) and fixed to the second spatula (4) and to the second auxiliary member (10).

4. The gripping device according to claim 3 when it depends on claim 2, wherein the first motor and the second motor are the same motor.

5. The gripping device according to claim 3 or 4 when they depend on claim 2, wherein the first driving pulley (30) and the second driving pulley (33) are coaxial and, alternately, rotate with a same direction of rotation or with opposite directions of rotation.

6. The gripping device according to any one of claims 1 to 5, wherein the supporting structure (2) comprises a first shoulder (13) and a second shoulder (14) facing each other and spaced apart from each other along a spacing line perpendicular to the sliding plane, and wherein the first spatula (3), the second spatula (4), the first auxiliary member (9) and the second auxiliary member (10) each have two ends slidably associated one with the first shoulder (13) and one with the second shoulder (14).

7. The gripping device according to claim 6, wherein the first shoulder (13) and the second shoulder (14) each comprise a base portion (15) and two lateral portions (16) which extend upwards from the base portion (15), wherein each first guide (8) is defined by the base portion (15) of the first shoulder (13) and by the base portion (15) of the second shoulder (14), and wherein each second guide (11) is defined by a lateral portion (16) of the first shoulder (13) and by a lateral portion (16) of the second shoulder (14).

8. The gripping device according to claim 7, wherein each first guide (8) and each second guide (11) comprises two sliding slots (21) which are straight, opposite each other and made, respectively, one in the first shoulder (13) and one in the second shoulder (14) and wherein the ends of the first spatula (3), of the second spatula (4), of the first auxiliary member (9) and of the second auxiliary member (10) are slidably coupled to the respective sliding slots (21).

9. The gripping device according to claim 8, wherein the lateral portions (16) and the base portion (15) of each of the first shoulder (13) and the second shoulder (14), extend, respectively, along two sloping sides and along a base of an isosceles triangle, and wherein the sliding slots (21) of each first guide (8) extend parallel to the base of the isosceles triangle, whilst the sliding slots (21) of each second guide (11) extend parallel to a respective side of the isosceles triangle.

10. The gripping device according to any one of claims 1 to 9, wherein the supporting surface (5) of each of the first spatula (3) and the second spatula (4), slopes upwards starting from the respective front edge (6) by an angle of less than 10°.

11. The gripping device according to any one of claims 1 to 10, wherein a lower surface (7) of each of the first spatula (3) and the second spatula (4), facing the opposite way to the supporting surface (5), slopes upwards starting from the front edge (6) by an angle of less than 10°.

12. The gripping device according to claim11 when it depends on claim 10, wherein, for each of the first spatula (3) and the second spatula (4), the supporting surface (5) slopes upwards more than the lower surface (7) and the thickness increases moving away from the lower edge.

13. The gripping device according to any one of claims 1 to 12, wherein, in use, the front edges (6) of the first spatula (3) and of the second spatula (4) are positioned lower than the supporting structure (2).

14. The gripping device according to any one of claims 1 to 12, wherein during the movement of the first spatula (3) and of the second spatula (4) along the respective first trajectory, the respective front edges (6) move in a single translating plane which in use is horizontal.

15. The gripping device according to any one of claims 1 to 14, wherein:
in any position adopted by the first spatula (3) and by the first auxiliary member (9), a main stretch (29) of the first flexible belt (24) which extends from the front edge (6) of the first spatula (3) to the rear edge (12) of the first auxiliary member (9) substantially always has a same length; and
in any position adopted by the second spatula (4) and by the second auxiliary member (10), a main stretch (29) of the second flexible belt (28) which extends from the front edge (6) of the second spatula (4) to the rear edge (12) of the second auxiliary member (10) substantially always has a same length.

16. The gripping device according to claim 15, wherein each of the first auxiliary member (9) and the second auxiliary member (10) comprises a supporting member (42), a guiding member (43) which defines the rear edge (12) and one or more elastic elements interposed between the supporting member (42) and the guiding member (43), the one or more elastic elements being configured to deform and allow the guiding member (43) to move towards the supporting member when, respectively, the first flexible belt (24) and the second flexible belt (28) apply a thrust on the guiding member (43) towards the supporting member (42), and to keep substantially unchanged said length of each main stretch (29).
